# FASCICULE DE BREVET EUROPEEN

(11) **EP 4 103 903 B1**
(45) Date de publication et mention de la délivrance du brevet: **16.07.2025**
(21) Numéro de dépôt: 21708724.6
(22) Date de dépôt: 11.02.2021
(51) Int. Cl.: F28D 9/00, F28F 19/01, F28F 19/00

(54) **ÉCHANGEUR THERMIQUE À DISPOSITIF DE PURIFICATION POUR VÉHICULE AUTOMOBILE**
WÄRMETAUSCHER, DER EINE REINIGUNGSVORRICHTUNG FÜR EIN KRAFTFAHRZEUG AUFWEIST
HEAT EXCHANGER HAVING A PURIFICATION DEVICE FOR A MOTOR VEHICLE

(30) Priorité: 12.02.2020 FR 2001394
(43) Date de publication de la demande: 21.12.2022
(73) Titulaire: VALEO SYSTEMES THERMIQUES, 78320 Le Mesnil Saint-Denis (FR)
(72) Inventeur: DENOUAL, Christophe, 72210 LA SUZE SUR SARTHE (FR); JOVET, Bastien, 78322 LE MESNIL SAINT DENIS CEDEX (FR); NAVARRE, Quentin, 78322 LE MESNIL SAINT DENIS CEDEX (FR); VERON, Julien, 72210 LA SUZE SUR SARTHE (FR)
(74) Mandataire: Valeo Systèmes Thermiques
(86) Numéro de dépôt international: PCT/FR2021/050254
(87) Numéro de publication internationale: WO 2021/160971

(56) Documents cités:
- EP-A1- 2 255 862
- WO-A1-02/052215
- CN-A- 104 567 490
- CN-U- 207 006 949
- US-A- 3 690 373
- US-A1- 2015 135 939

## Description

La présente invention se rapporte au domaine des échangeurs thermiques, notamment destinés à équiper les systèmes de climatisation et/ou les systèmes de refroidissement de véhicules automobiles. Plus particulièrement, l'invention concerne des systèmes de refroidissement de dispositifs de stockage électrique de véhicules automobiles.

Dans le domaine automobile, il est courant d'avoir à modifier une température d'un composant, tel qu'un moteur électrique, une batterie, un dispositif de stockage de calories et/ou de frigories ou analogues. A cet effet, le véhicule automobile est équipé d'une installation qui comprend un circuit de fluide réfrigérant à l'intérieur duquel circule un fluide réfrigérant et un circuit de liquide caloporteur à l'intérieur duquel circule un liquide caloporteur. Le circuit de fluide réfrigérant comprend un compresseur pour comprimer le fluide réfrigérant, un condensateur pour refroidir le fluide réfrigérant à pression constante, un organe de détente pour permettre une détente du fluide réfrigérant et un échangeur thermique qui est agencé pour permettre un transfert thermique entre le fluide réfrigérant et le liquide caloporteur. Le circuit de liquide caloporteur comprend une pompe et un organe d'échange thermique apte à modifier une température du composant.

Une solution, actuellement privilégiée par plusieurs constructeurs pour refroidir les cellules de batterie, consiste à complètement immerger ces cellules dans le fluide caloporteur. L'avantage d'une telle solution est de mettre en contact direct l'élément chauffant avec le fluide caloporteur ce qui permet d'évacuer plus de chaleur dégagée par les cellules. Ainsi l'efficacité de refroidissement est accrue par rapport aux solutions traditionnelles. De plus, cette solution convient à tous les modes de charge de la batterie utilisés : rapide, normal ou intermédiaire. Donc l'efficacité de la gestion thermique est nettement améliorée.

Un premier inconvénient d'une telle solution est que le liquide doit rester dépourvu de particules circulant dans le fluide pour éviter une détérioration prématurée des cellules et de l'échangeur thermique et/ou de la pompe par abrasion par exemple.

Un deuxième inconvénient d'une telle solution est le risque de court-circuit. En effet, il faut suivre de près la résistance électrique du fluide caloporteur car s'il se trouve pollué avec des éléments conducteurs par exemple présents dans le circuit ou apportés par de l'eau extérieur, il peut devenir suffisamment électriquement conducteur pour provoquer des courts-circuits au sein de la batterie.

Un troisième inconvénient de cette solution est la possible corrosion des cellules si le fluide caloporteur est contaminé par de l'eau. En effet, l'eau au contact des cellules s'élève en température ce qui a pour conséquence d'augmenter très nettement son pouvoir corrosif.

WO-A-02052215 divulgue un échangeur thermique selon le préambule de la revendication 1.

La présente invention a pour objet de répondre au moins en partie aux problèmes précédents et de conduire en outre à d'autres avantages en proposant un nouveau type d'échangeur thermique pour véhicule automobile.

L'invention fournit un échangeur thermique, notamment pour véhicule automobile, comprenant une pluralité de plaques, les plaques étant empilées les unes sur les autres selon un axe d'empilement pour former un faisceau de plaques, au moins une première plaque et au moins une deuxième plaque qui définissent un premier chemin de circulation configuré pour une circulation d'un premier fluide, au moins la deuxième plaque et au moins une troisième plaque qui définissent un deuxième chemin de circulation configuré pour une circulation d'un deuxième fluide, le faisceau de plaques comportant une première chambre de distribution qui alimente en premier fluide le premier chemin de circulation, et une deuxième chambre de distribution qui alimente en deuxième fluide le deuxième chemin de circulation. L'échangeur thermique comprend en outre au moins un dispositif de purification agencé dans l'une des chambres de distribution.

Ainsi une fonction du dispositif de purification peut être de retenir les particules présentant un diamètre suffisamment important pour obturer et/ou détériorer un chemin de circulation par abrasion.

Dans le cadre d'un refroidissement de cellules d'une batterie, le dispositif de purification peut avoir par ailleurs une fonction d'absorption de toutes particules conductrices en provenance d'autres composants ou d'un environnement extérieur et qui représente donc un risque de court-circuit.

Le dispositif de purification permet de retirer l'eau qui se serait introduite dans l'échangeur thermique et ainsi empêcher la corrosion et/ou la conduction d'électricité de ce dernier.

Enfin, les pertes de charge induite par l'utilisation du dispositif de purification présente l'avantage de mieux répartir le premier fluide ou le deuxième fluide dans les plaques du faisceau de l'échangeur thermique. En d'autres termes, on utilise les pertes de charge crées par le dispositif de purification pour répartir de manière plus uniforme le débit dans chacune des plaques.

Selon un mode de réalisation, le dispositif de purification présente une forme sensiblement complémentaire à une forme de la chambre de distribution dans laquelle il est agencé. Il faut entendre ici, ainsi que dans tout ce qui suit, par « sensiblement », que les tolérances de fabrication, ainsi que d'éventuelles tolérances d'assemblage, doivent être prises en compte.

Selon un mode de réalisation, le dispositif de purification présente une forme de cylindre. Plus particulièrement, le dispositif de purification présente une forme de cylindre droit à base circulaire ou à base triangulaire.

Selon un mode de réalisation, le dispositif de purification s'étend sur toute une longueur de la chambre de distribution le logeant mesurée le long de l'axe d'empilement.

Selon un mode de réalisation, la chambre de distribution logeant le dispositif de purification traverse le faisceau selon l'axe d'empilement.

Selon un mode de réalisation, le dispositif de purification comprend un support ajouré définissant un pourtour du dispositif de purification et un compartiment du dispositif de purification.

Selon un mode de réalisation, le dispositif de purification comprend au moins un filtre et/ou au moins un dessicant.

Il faut entendre par « dessicant » ici, ainsi que dans tout ce qui suit, un élément absorbeur d'eau ou un mélange entre un ou plusieurs éléments absorbeur d'eau et/ou d'autres composés.

Selon un mode de réalisation le filtre comprend une surface filtrante, la surface filtrante étant disposée circonférentiellement au support.

Selon un mode de réalisation, la surface filtrante présente une porosité comprise entre 10µm et 500µm. La porosité est une dimension maximum des particules retenues par la surface filtrante.

Selon un mode de réalisation, le dessicant comprend au moins un élément absorbeur d'eau choisi parmi un gel de silice, un sulfate de magnésium, un chlorure de calcium, un sulfate de calcium, un chlorure de lithium, et un tamis moléculaire, par exemple une zéolithe.

Selon un mode de réalisation, le dessicant comprend une poche agencée dans le compartiment du dispositif de purification, l'élément absorbeur d'eau étant disposé dans la poche.

Selon un mode de réalisation, l'échangeur thermique comprend une interface apte à coopérer avec un orifice de la chambre de distribution logeant le dispositif de purification et avec le dispositif de purification.

L'interface permet de relier le chemin de circulation avec une boucle ou un circuit. Ainsi le fluide entrant par l'interface dans la chambre de distribution logeant le dispositif de purification est purifié avant d'emprunter le chemin de circulation.

Selon un mode de réalisation, un passage de l'interface et le compartiment du dispositif de purification sont en communication hydraulique.

Selon un mode de réalisation, l'interface est monobloc avec au moins une partie du dispositif de purification. Il faut entendre ici, ainsi que dans tout ce qui suit, par « monobloc » que les éléments monobloc sont d'une seule pièce, d'un seul bloc.

Selon un mode de réalisation, l'interface est venue de matière avec au moins une partie du dispositif de purification.

Il faut entendre ici, ainsi que dans tout ce qui suit, par « venu de matière », que les éléments venus de matière forment une seule et même pièce, et donc sont faits du ou des mêmes matériaux. Cette pièce peut être obtenue par exemple par moulage ou par injection. Cette pièce est donc différente d'éléments rapportés par soudage ou collage. Selon un mode de réalisation, la chambre de distribution logeant le dispositif de purification comprend une première et une deuxième extrémité, la première extrémité étant ouverte sur un environnement extérieur du faisceau selon l'axe d'empilement. Selon un mode de réalisation, l'échangeur thermique comprend un organe d'étanchéité disposé entre l'interface et le dispositif de purification.

Selon un mode de réalisation, l'échangeur thermique comprend au moins un organe d'étanchéité agencé autour d'une extrémité de l'interface.

Selon un mode de réalisation, l'échangeur thermique comprend au moins un organe d'étanchéité agencé autour d'une extrémité du dispositif de purification.

Selon un mode de réalisation, le faisceau présente une bouche à une extrémité, la bouche est configurée pour admettre le fluide et pour manipuler le dispositif de purification par rapport à l'échangeur thermique. Il faut entendre ici, ainsi que dans tout ce qui suit, par « manipuler », que cela concerne autant l'extraction que l'insertion du dispositif de purification dans une chambre de distribution en vue de son remplacement. Selon un mode de réalisation, la bouche est au droit de l'extrémité de la chambre de distribution qui est ouverte sur un environnement extérieur du faisceau selon l'axe d'empilement.

Selon un mode de réalisation, le dispositif de purification comprend une ouverture d'admission de fluide. Cette ouverture permet d'admettre le premier ou le deuxième fluide dans le dispositif de purification avant qu'il n'emprunte un des chemins de circulation.

Selon un mode de réalisation, l'interface comprend un passage configuré pour être en communication avec une ouverture d'admission de fluide du dispositif de purification. Selon un mode de réalisation, le dispositif de purification comprend un système de verrouillage pour attacher le dispositif de purification à l'interface et/ou à la bouche du faisceau.

Selon un mode de réalisation, le système de verrouillage est configuré pour attacher l'interface à la bouche du faisceau.

Selon un mode de réalisation, le système de verrouillage comprend une douille fixation. Selon un mode de réalisation, le système de verrouillage comprend une douille de connexion.

Selon un mode de réalisation, le système de verrouillage comprend une épingle d'axe. Selon un mode de réalisation, la deuxième extrémité de la chambre de distribution logeant le dispositif de purification est ouverte sur un environnement extérieur du faisceau selon l'axe d'empilement.

Selon un mode de réalisation, le dispositif de purification comporte un bouchon à une extrémité opposée à une ouverture d'admission de fluide.

Selon un mode de réalisation, le faisceau présente une première bouche à une première extrémité, et une deuxième bouche à une deuxième extrémité, la première bouche est configurée pour admettre le fluide, et la deuxième bouche pour manipuler le dispositif de purification par rapport à l'échangeur thermique.

Selon un mode de réalisation, la première bouche est au droit de la première extrémité de la chambre de distribution.

Selon un mode de réalisation, la deuxième bouche est au droit de la deuxième extrémité de la chambre de distribution.

Selon un mode de réalisation, le dispositif de purification comprend un dispositif de fixation configuré pour attacher le bouchon à la deuxième bouche.

Selon un mode de réalisation, le dispositif de fixation comprend une épingle d'axe apte à coopérer avec le bouchon pour assurer la fixation du bouchon à la deuxième bouche. Selon un mode de réalisation, le dispositif de fixation est un filetage agencé à une périphérie du bouchon configuré pour coopérer avec un taraudage de la deuxième bouche.

Selon un mode de réalisation, une extrémité du dispositif de purification est logée dans un passage de l'interface.

Selon un mode de réalisation, l'échangeur thermique comprend au moins un organe d'étanchéité agencé autour du bouchon.

Selon un mode de réalisation, le premier fluide comprend au moins un fluide caloporteur. En d'autres termes, le premier fluide peut comprendre un fluide caloporteur ou un mélange entre un ou plusieurs fluides caloporteurs et un ou plusieurs autres fluides.

Selon un mode de réalisation, le fluide caloporteur comprend au moins un fluide caloporteur diélectrique. En d'autres termes, le fluide caloporteur peut comprendre un fluide caloporteur diélectrique ou un mélange entre un ou plusieurs fluides caloporteurs diélectriques et un ou plusieurs autres fluides.

Selon un mode de réalisation, le fluide caloporteur diélectrique présente une constante diélectrique supérieure ou égale à 78 à 25°C.

Selon un mode de réalisation, le fluide caloporteur diélectrique comprend au moins un composé choisi parmi une huile minérale, une huile de synthèse, un éther fluoré, un silicone, et un hydrocarbure fluoré.

Selon un mode de réalisation, l'hydrocarbure fluoré est choisi parmi un perfluorohexane, un perfluorométhylcyclohexane, un perfluoro-1,3-diméthylcyclohexane, un perfluorodécaline, un perfluorométhyldecaline, un trichlorofluorométhane et un trichlorotrifluoroéthane.

Selon un mode de réalisation, le deuxième fluide comprend au moins un liquide réfrigérant. En d'autres termes, le deuxième fluide peut comprendre un liquide réfrigérant ou un mélange entre un ou plusieurs liquides réfrigérants et un ou plusieurs autres fluides.

Selon un mode de réalisation, le liquide réfrigérant est choisi parmi un hydrochlorofluorocarbure (HCFC), un hydrofluorocarbure (HFC) et un dioxyde de carbone.

Selon un mode de réalisation, l'hydrofluorocarbure est choisi parmi le 1,1,1,2-tétrafluoroéthane et le 2,3,3,3-tétrafluropropène.

Selon un mode de réalisation, le dispositif de purification est un premier dispositif de purification agencé dans la première chambre de distribution, le faisceau de plaques comprend une première chambre d'évacuation configurée pour recueillir le premier fluide ayant parcouru le premier chemin de circulation, et l'échangeur thermique comprend un deuxième dispositif de purification agencé dans la première chambre d'évacuation.

Selon un mode de réalisation, le dispositif de purification est un premier dispositif de purification agencé dans la première chambre de distribution et dans lequel l'échangeur thermique comprend un deuxième dispositif de purification agencé dans la deuxième chambre de distribution.

Selon un mode de réalisation, le deuxième dispositif de purification comprend un support ajouré définissant un pourtour du deuxième dispositif de purification et un compartiment du deuxième dispositif de purification.

Selon un mode de réalisation, le deuxième dispositif de purification comprend au moins un filtre et/ou au moins un dessicant.

Selon un mode de réalisation, le filtre du deuxième dispositif de purification comprend au moins une surface filtrante, la surface filtrante étant disposée circonférentiellement au support.

Selon un mode de réalisation, la surface filtrante du deuxième dispositif de purification présente une porosité comprise entre 10µm et 500µm.

Selon un mode de réalisation, le dessicant du deuxième dispositif de purification comprend au moins un élément absorbeur d'eau choisi parmi un gel de silice, un sulfate de magnésium, un chlorure de calcium, un sulfate de calcium, un chlorure de lithium, et un tamis moléculaire, par exemple une zéolithe.

Selon un mode de réalisation, le dessicant du deuxième dispositif de purification comprend une poche agencée dans le compartiment du deuxième dispositif de purification, l'élément absorbeur d'eau étant disposé dans la poche.

Selon un mode de réalisation, l'invention fournit en outre un système de refroidissement d'un dispositif de stockage électrique pour véhicules automobiles. Le système comprend un échangeur thermique selon l'invention, une boucle couplée thermiquement avec le dispositif de stockage électrique et en communication avec le premier chemin de circulation de l'échangeur, et un circuit en communication avec le deuxième chemin de circulation de l'échangeur thermique.

Selon un mode de réalisation, la boucle est parcourue par un fluide caloporteur diélectrique, et le circuit est parcouru par un liquide réfrigérant.

Selon un mode de réalisation, l'invention fournit un véhicule comprenant un échangeur thermique selon l'invention et/ou un système de refroidissement selon l'invention. Selon un mode de réalisation, l'invention fournit une méthode de remplacement d'un dispositif de purification usagé. La méthode de remplacement comprend une étape de vidange d'un échangeur selon l'une des revendications précédentes, une étape consistant à extraire le dispositif de purification usagé de la chambre de distribution et une étape d'introduction dans la chambre de distribution d'un dispositif de purification de remplacement.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] est une vue schématique en perspective d'un échangeur thermique comprenant un dispositif de purification selon un premier mode de réalisation de l'invention vu selon un premier angle de vue ;
[fig 2] est une vue schématique en perspective d'une plaque d'un faisceau de l'échangeur thermique de la figure 1 ;
[fig 3] est une vue schématique du faisceau de plaques de l'échangeur thermique de la figure 1 ;
[fig 4] est une vue tronquée en coupe selon un plan parallèle au plan YZ d'un échangeur thermique apte à accueillir un dispositif de purification selon le premier mode de réalisation ;
[fig 5] est une vue tronquée en coupe selon un angle de vue d'un échangeur thermique apte à accueillir un dispositif de purification selon un deuxième mode de réalisation ;
[fig 6] est une vue tronquée en coupe selon un plan parallèle au plan YZ d'un échangeur thermique comprenant un dispositif de purification selon un troisième mode de réalisation ;
[fig 7] est une vue tronquée en coupe selon un plan parallèle au plan YZ d'un échangeur thermique comprenant un dispositif de purification selon un quatrième mode de réalisation ;
[fig 8] est une vue en perspective en coupe selon un angle de vue d'un échangeur thermique comprenant un dispositif de purification selon un cinquième mode de réalisation ;
[fig 9] est une vue tronquée en coupe selon un plan parallèle au plan YZ d'un échangeur thermique comprenant un dispositif de purification selon un sixième mode de réalisation ;
[fig 10] est une vue tronquée en coupe selon un plan parallèle au plan YZ d'un échangeur thermique comprenant un dispositif de purification selon un septième mode de réalisation.

Il faut tout d'abord noter que si les figures exposent l'invention de manière détaillée pour sa mise en œuvre, elles peuvent bien entendu servir à mieux définir l'invention le cas échéant. Il est également à noter que, sur l'ensemble des figures, les éléments similaires et/ou remplissant la même fonction sont indiqués par la même numérotation.

Dans la description qui va suivre, une direction d'un axe longitudinal X, une direction d'un axe transversal Y, et une direction d'un axe vertical Z sont représentées par un trièdre (X, Y, Z) sur les figures. On définit un plan horizontal comme étant un plan perpendiculaire à l'axe vertical, un plan longitudinal comme étant un plan perpendiculaire à l'axe transversal, et un plan transversal comme étant un plan perpendiculaire à l'axe longitudinal.

L'échangeur thermique 1 selon l'invention peut être utilisé dans un système de refroidissement, notamment pour refroidir des cellules d'une batterie électrique. Le système de refroidissement comprend un échangeur thermique selon l'invention, une boucle couplée thermiquement avec le dispositif de stockage électrique et en communication avec un premier chemin de circulation 6 (représenté par les flèches 6) de l'échangeur thermique 1, et un circuit en communication avec un deuxième chemin de circulation 7 (représenté par les flèches 7) de l'échangeur thermique 1.

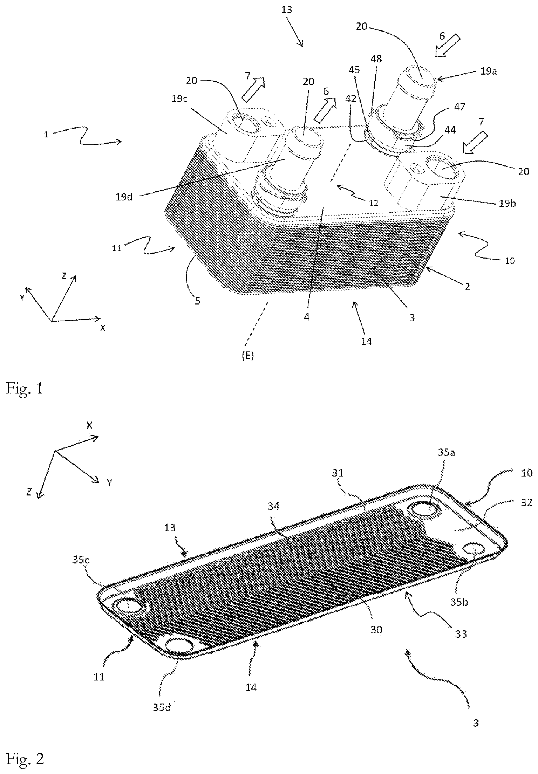

La figure 1 montre en perspective un échangeur thermique 1 selon l'invention utilisé notamment pour refroidir des cellules d'une batterie électrique. Cet échangeur pourrait être aussi employé pour refroidir et/ou réchauffer d'autres composants se trouvant dans un véhicule automobile.

L'échangeur thermique met en œuvre un échange de calories entre un premier fluide et un deuxième fluide, le premier fluide étant alors refroidi par le deuxième fluide. Le premier fluide est avantageusement un fluide caloporteur ou un mélange entre un ou plusieurs fluides caloporteurs et un ou plusieurs autres fluides, le ou les fluides caloporteurs étant sélectionnés parmi les fluides caloporteurs autorisés et adapté à l'usage qui en est fait. Le ou les fluides caloporteurs sont notamment des fluides caloporteurs diélectriques. Un fluide caloporteur diélectrique est un fluide caloporteur dépourvu de charges électriques susceptibles de se déplacer macroscopiquement. Le fluide caloporteur diélectrique ne peut donc pas conduire le courant électrique. Autrement dit, une tension de claquage du fluide caloporteur diélectrique est suffisamment importante pour éviter toute conduction de courant électrique dans la batterie électrique.

De tels fluides caloporteurs diélectriques peuvent se présenter sous la forme de liquides diélectriques. Les fluides caloporteurs diélectriques peuvent être par exemple une huile minérale, une huile de synthèse un éther fluoré, un silicone ou un hydrocarbure fluoré. Un hydrocarbure fluoré est préférentiellement choisi parmi le perfluorohexane, le perfluorométhylcyclohexane, le perfluoro-1,3- diméthylcyclohexane, le perfluorodécaline, le perfluorométhyldecaline, le trichlorofluorométhane et le trichlorotrifluoroéthane.

Dans le cas où le liquide caloporteur est directement en contact avec des cellules de batterie électrique, on préfèrera les liquides présentant une constante diélectrique supérieure ou égale à 78 à 25°C.

Le deuxième fluide est préférentiellement un fluide réfrigérant ou un mélange entre un ou plusieurs fluides réfrigérants et un ou plusieurs autres fluides, le ou les fluides réfrigérants étant sélectionnés parmi les fluides réfrigérants autorisés et adaptés à l'usage qui en est fait. Le ou les fluides réfrigérants sont notamment des liquides réfrigérants de la famille des hydrochlorofluorocarbures (HCFC), ou des hydrofluorocarbures. Le liquide réfrigérant peut notamment être du R134a connu sous le nom 1,1,1,2-tétrafluoroéthane, ou du 1234YF aussi appelé 2,3,3,3-tétrafluropropène. Le liquide réfrigérant peut également être le dioxyde de carbone connu sous l'acronyme R744.

En référence à la figure 1, l'échangeur thermique 1 comprend un faisceau 2 formé par un empilement de plaques 3, superposées les unes aux autres le long d'un axe d'empilement E, parallèle à l'axe vertical Z. L'échangeur thermique 1, et donc le faisceau 2, comprend une première extrémité longitudinale 10 et une deuxième extrémité longitudinale 11 opposée à la première extrémité longitudinale selon l'axe longitudinal X. La première extrémité longitudinale 10 et la deuxième extrémité longitudinale 11 sont opposées par rapport à un centre 12 de l'échangeur thermique 1.

L'échangeur thermique 1, et donc le faisceau 2, comprend une première extrémité transversale 13 et une deuxième extrémité transversale 14 opposée à la première extrémité transversale 13 selon l'axe transversal Y. La première extrémité transversale 13 et la deuxième extrémité transversale 14 sont opposées par rapport au centre 12 de l'échangeur thermique 1.

Le faisceau 2 comprend une joue supérieure 4 et une joue inférieure 5 qui délimitent le faisceau 2 le long de l'axe d'empilement E. Entre ces deux joues 4, 5 sont agencées les plaques 3 qui délimitent deux chemins de circulation distincts : un premier chemin de circulation 6 configuré pour être parcouru par le premier fluide et un deuxième chemin de circulation 7 configuré pour être parcouru par le deuxième fluide.

Un exemple de plaque 3 est illustré à la figure 2. Deux plaques 3 immédiatement adjacentes définissent un tube de circulation où peut circuler le premier fluide ou le deuxième fluide. Les tubes de circulation agencés pour la circulation du premier fluide, dit premiers tubes de circulation, alternent avec les conduits agencés pour la circulation du deuxième fluide, dit deuxièmes tubes de circulation. Ainsi, une première plaque 3 peut être agencée pour la circulation du premier fluide en collaboration avec une deuxième plaque 3 adjacente, et être agencée pour la circulation du deuxième fluide en collaboration avec une troisième plaque 3 adjacente. Une même plaque 3 est ainsi léchée d'un côté par le premier fluide et de l'autre par le deuxième fluide.

L'ensemble des premiers tubes de circulation forme le premier chemin de circulation 6. L'ensemble des deuxièmes tubes de circulation forme le deuxième chemin de circulation 7.

Comme visible sur la figure 2, chaque plaque 3 présente la forme d'une baignoire, c'est-à-dire qu'elle comprend un fond 30 entouré d'un bord périphérique 31. Le fond 30 a une forme de rectangle aux angles arrondis. Le bord périphérique 31 entourant le fond s'étend de façon continue tout autour de la plaque 3.

Les plaques 3 sont empilées les unes sur les autres, une face supérieure 32 d'une première plaque 3 étant en regard d'une face inférieure 33 d'une deuxième plaque 3 adjacente. De même, une face inférieure 33 de la première plaque 3 est en regard d'une face supérieure 32 d'une troisième plaque 3 adjacente.

Les plaques 3 sont fabriquées par emboutissage, estampage ou roulage d'un feuillard d'un matériau agencé pour autoriser des échanges thermiques suffisant pour permettre à l'échangeur thermique 1 de remplir son rôle. Il peut notamment s'agir d'aluminium ou d'un alliage d'aluminium.

Les plaques 3 comprennent au moins un dispositif de perturbation 34 illustré sur la figure 2 et agencé pour perturber la circulation du fluide ou des fluides circulant le long des plaques 3. Ceci permet d'améliorer les échanges de chaleur entre le premier fluide et le deuxième fluide. Le dispositif de perturbation 34 est par exemple issu de matière avec les plaques 3, c'est-à-dire qu'ils forment un seul bloc de matière avec la plaque 3 dans laquelle il est formé. Le dispositif de perturbation 34 peut être donc être issu du procédé de fabrication de la plaque 3, et est par exemple embouti en même temps que la plaque 3.

Le dispositif de perturbation 34 s'étend sur la face supérieure 32 et sur la face inférieure 33 du fond 30 selon l'axe vertical Z et s'étend entre la première extrémité longitudinale 10 et la deuxième extrémité longitudinale 11 de la plaque 3. Dans l'exemple illustré sur la figure 2, le dispositif de perturbation 34 prend la forme de chevrons, c'est-à-dire une succession de sillons profilés en V vu dans un plan perpendiculaire à l'axe vertical Z c'est-à-dire dans le plan horizontal.

Chaque plaque 3 comprend en outre des trous 35. Dans l'exemple de l'invention, les plaques 3 comporte chacune quatre trous, disposés à chacun des angles de la plaque 3 et agencés dans le fond 30. Les plaques comportent ainsi un premier trou 35a, un deuxième trou 35b, un troisième trou 35c et un quatrième trou 35d. Les trous 35 ont une forme circulaire. Les trous 35 sont traversants. Ces trous 35 sont agencés pour permettre le passage du premier fluide ou du deuxième fluide.

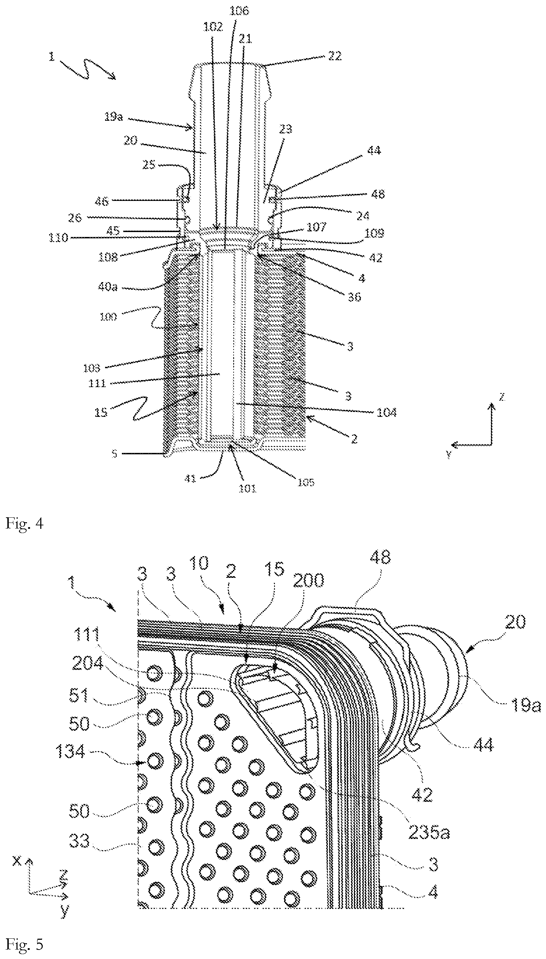

En référence aux figures 2 à 4, le premier trou 35a est disposé à l'angle de la première extrémité longitudinale 10 et de la première extrémité transversale 13. Lorsque les plaques 3 sont empilées et forment le faisceau 2, les premiers trous 35a sont alors alignés entre eux et forment une première chambre de distribution 15 du premier fluide dans le premier chemin de circulation 6. La première chambre de distribution 15 est bordée par le contour des premiers trous 35a, la joue inférieure 5 et la joue supérieure 4. Elle présente donc une forme de cylindre droit de base circulaire. La première chambre de distribution 15 permet de répartir le premier fluide dans les premiers tubes de circulation. La première chambre de distribution accueille un dispositif de purification 100, vu sur la figure 4. Les premiers tubes de circulation forment le premier chemin de circulation 6.

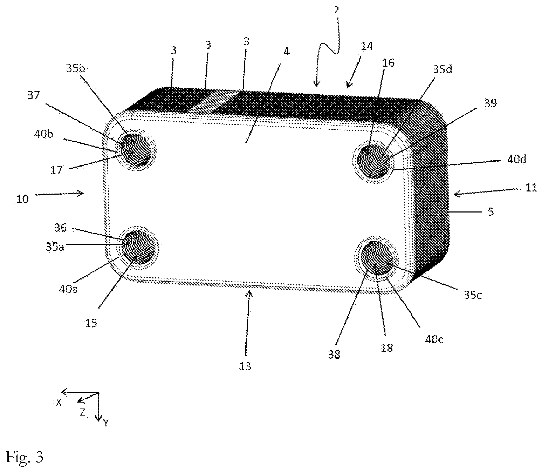

Comme illustré par les figures 2 et 3, le deuxième trou 35b est disposé à l'angle de la première extrémité longitudinale 10 et de la deuxième extrémité transversale 14. Lorsque les plaques 3 sont empilées et forment le faisceau 2, les deuxièmes trous 35b sont alors alignés entre eux et forment la deuxième chambre de distribution 17 du deuxième fluide du deuxième chemin de circulation 7. La deuxième chambre de distribution 17 est bordée par le contour des deuxièmes trous 35b, la joue inférieure 5 et la joue supérieure 4. Elle présente donc une forme de cylindre droit de base circulaire. La deuxième chambre de distribution 17 permet de répartir le deuxième fluide dans les deuxièmes tubes de circulation formant le deuxième chemin de circulation 7.

En référence aux figures 2 à 3, le troisième trou 35c est disposé à l'angle de la deuxième extrémité longitudinale 11 et de la première extrémité transversale 13. Lorsque les plaques 3 sont empilées et forment le faisceau 2, les troisièmes trous 35c sont alors alignés entre eux et forment une deuxième chambre d'évacuation 18 du deuxième fluide dans le deuxième chemin de circulation 7. La deuxième chambre d'évacuation18 est bordée par le contour des troisièmes trous 35c, la joue inférieure 5 et la joue supérieure 4. Elle présente donc une forme de cylindre droit de base circulaire. La deuxième chambre d'évacuation 18 permet de rassembler le deuxième fluide réparti dans les deuxièmes tubes de circulation et de l'envoyer vers le circuit en communication avec un deuxième chemin de circulation 7.

Comme le montrent les figures 2 et 3, le quatrième trou 35d est disposé à l'angle de la deuxième extrémité longitudinale 11 et de la deuxième extrémité transversale 14. Lorsque les plaques 3 sont empilées et forment le faisceau 2, les quatrièmes trous 35d sont alors alignés entre eux et forment une première chambre d'évacuation 16 du premier fluide. La première chambre d'évacuation 16 est bordée par le contour des quatrièmes trous 35d, la joue inférieure 5 et la joue supérieure 4. Elle présente donc une forme de cylindre droit de base circulaire. La première chambre d'évacuation 16 permet de rassembler le premier fluide réparti dans les premiers tubes de circulation et de l'envoyer vers la boucle couplée thermiquement avec le dispositif de stockage électrique.

Pour obtenir le faisceau 2 de plaques 3, les différentes plaques 3 sont empilées selon la direction d'empilement E. L'ensemble des plaques 3 sont alors brasées selon un procédé de brasage par passage dans un four. Cette étape solidarise les différentes plaques 3 entre elles.

Comme illustré sur les figures 2 à 4, le faisceau 2 comprend des bouches supérieures 40 pour permettre aux chambres de distribution 15, 17 et aux chambres d'évacuation 16,18 d'être ouvertes sur l'extérieur du faisceau 2. Dans l'exemple de l'invention, le faisceau 2 comporte quatre bouches supérieures 40 formées au niveau de la joue supérieure 4 et disposées aux droits des trous 35 des plaques 3. La joue supérieure 4 comportent ainsi une première bouche supérieure 40a disposée au droit des trous 35a, une deuxième bouche supérieure 40b disposée au droit des trous 35b, une troisième bouche supérieure 40c disposée au droit des trous 35c, et une quatrième bouche supérieure 40d disposée au droit des trous 35d. Les bouches supérieures 40 ont une forme sensiblement circulaire dans le plan horizontal. Les bouches supérieures 40 sont traversantes.

La première bouche supérieure 40a délimite un premier orifice supérieur 36 de la première chambre de distribution 15. La deuxième bouche supérieure 40b délimite un deuxième orifice supérieur 37 de la deuxième chambre de distribution 17. La troisième bouche supérieure 40c délimite une deuxième trouée supérieure 38 de la deuxième chambre d'évacuation 18. La quatrième bouche supérieure 40d délimite une première trouée supérieure 39 de la première chambre d'évacuation 16.

L'échangeur thermique 1 comprend par ailleurs des interfaces 19 pour mettre en relation ces chemins de circulation avec des chemins extérieurs de circulation. Ainsi, une partie des interfaces 19 met en communication la boucle couplée thermiquement avec le dispositif de stockage électrique avec le premier chemin de circulation 6 de l'échangeur thermique 1. Une autre partie des interfaces 19 permettent de connecter le deuxième chemin de circulation 7 de l'échangeur thermique 1 au circuit.

Dans l'exemple de l'invention selon un premier mode de réalisation illustré en figures 1 à 4, l'échangeur thermique 1 comprend une première interface 19a pour que le premier fluide issu de la boucle puisse entrer dans l'échangeur thermique 1 par le premier orifice supérieur 36 de la première chambre de distribution 15.

L'échangeur thermique 1 comporte en outre une deuxième interface 19b pour que le deuxième fluide issu du circuit puisse entrer dans l'échangeur thermique 1 par le deuxième orifice supérieur 37 de la deuxième chambre de distribution 17.

L'échangeur thermique 1 comporte par ailleurs une troisième interface 19c par laquelle le deuxième fluide peut sortir de l'échangeur thermique 1 par la deuxième trouée supérieure 38 de la deuxième chambre d'évacuation 18 et rejoindre le circuit.

L'échangeur thermique 1 comprend par ailleurs une quatrième interface 19d par laquelle le premier fluide peut sortir de l'échangeur thermique 1 par la première trouée supérieure 39 de la première chambre d'évacuation 16 et rejoindre la boucle.

Dans le premier mode de réalisation illustré sur la figure 4, la première interface 19a prend la forme d'un manchon. La première interface 19a comprend une base inférieure 21 et une base supérieure 22 opposée à la base inférieure 21. Ces bases sont disposées selon l'axe vertical Z. La base inférieure 21 est plus proche de la première bouche supérieure 40a que la base inférieure 21. La base inférieure 21 est relié à la base supérieure 22 par un passage 20. Ainsi, la circulation du premier fluide de la boucle dans la chambre de distribution 15 est possible. Le passage 20 est donc au droit du premier orifice supérieur 36 de la première chambre de distribution 15. La première interface 19a s'étend depuis la première bouche supérieure 40a de la joue supérieure 4 vers le côté opposé au faisceau 2 selon la direction verticale Z. Le passage 20 s'étend perpendiculairement par rapport au plan horizontal tel que défini précédemment. La première bouche supérieure 40a est donc une ouverture d'admission du premier fluide dans la première chambre de distribution du faisceau 2 de l'échangeur thermique 1.

La première interface 19a comprend par ailleurs une bride 23 au niveau de la base inférieure 21 configurée pour coopérer avec le dispositif de purification 100. La bride 23 s'étend depuis la base inférieure 21 de manière radiale par rapport à l'axe vertical Z. La bride 23 affleure un contour de la base inférieure. La première interface 19a et la bride 23 sont réalisées monobloc. Par ailleurs, la première interface 19a comprend une première rainure 24 au voisinage de la bride 23. La première rainure 24 est agencée circonférentiellement sur l'extérieur de la première interface 19a. La première rainure 24 accueille un premier joint torique 26 qui est un organe d'étanchéité. Le premier joint torique 26 peut comprendre un élastomère. La première interface 19a comprend une deuxième rainure 25 au voisinage la première rainure 24. La deuxième rainure 25 est agencée circonférentiellement sur l'extérieur de la première interface 19a. La deuxième rainure 25 accueille une épingle d'axe 48. La première rainure 24 est disposée entre la bride 23 et la deuxième rainure 25 selon l'axe vertical Z.

La deuxième interface 19b se présente sous la forme d'un cylindre à base carrée. Cette deuxième interface 19b est dotée d'un passage 20 agencé pour permettre le transfert du deuxième fluide du circuit dans la deuxième chambre de distribution 17. Le passage 20 est donc au droit du deuxième orifice supérieur 37 de la deuxième chambre de distribution 17. Le cylindre à base carrée 19b s'étend depuis la deuxième bouche 40b de la joue supérieure 4 vers le côté opposé au faisceau selon la direction verticale Z. Deux coins adjacents du cylindre à base carrée 19b sont arrondis.

La troisième interface 19c se présente sous la forme d'un cylindre à base carrée. Cette troisième interface 19c est doté d'un passage 20 agencé pour permettre le transfert du deuxième fluide de la deuxième chambre d'évacuation 18 vers le circuit. Le passage est donc au droit de la deuxième trouée supérieure 38 de la deuxième chambre d'évacuation 18. Le cylindre à base carrée 19c s'étend depuis la troisième bouche 40c de la joue supérieure 4, du côté opposé au faisceau selon la direction verticale Z. Deux coins adjacents du cylindre à base carrée 19c sont arrondis.

La quatrième interface 19d prend la forme d'un manchon. Le manchon est dans l'exemple de la figure 1 à base circulaire. Le manchon est doté d'un passage 20 en son centre pour permettre le transfert du premier fluide de la première chambre d'évacuation 16 vers la boucle couplée thermiquement avec le dispositif de stockage électrique. Le manchon 19d s'étend depuis le voisinage de la quatrième bouche supérieure 40d de la joue supérieure vers le côté opposé au faisceau selon la direction verticale Z. Le passage 20 est donc au droit de la première trouée supérieure 37 de la première chambre d'évacuation 16.

Dans le premier mode de réalisation illustré sur la figure 4, la joue inférieure 5 comprend un renfoncement 41. Ce renfoncement 41 est agencé sur une face de la joue orientée vers les plaques 3. Il présente un fond circulaire dont les parois sont légèrement évasées. Le renfoncement 41 est agencé au droit de l'alignement des premier trous 35a de sorte à former un fond de la première chambre de distribution 15. Le renfoncement 41 est destiné à accueillir une partie du dispositif de purification 100.

Comme illustré sur la figure 4, l'échangeur thermique 1 comprend un dispositif de purification 100 disposé dans la première chambre de distribution 15. Au moins une partie du dispositif de purification 100 comprend une forme sensiblement complémentaire à une forme de la première chambre de distribution 15 dans laquelle il est en partie agencé. La première chambre de distribution 15 étant un cylindre droit à base circulaire, le dispositif de purification 100 présente donc une partie en forme de cylindre droit à base circulaire. Le dispositif de purification 100 s'étend selon une direction d'extension sensiblement parallèle à l'axe vertical Z. Le dispositif de purification 100 présente une première extrémité verticale 101 et une deuxième extrémité verticale 102 opposée à la première extrémité vertical 101 selon l'axe vertical Z.

Le dispositif de purification 100 comprend un récipient 103 comportant une paroi latérale 104. La paroi latérale 104 présente une forme de section circulaire et globalement symétrique autour de l'axe vertical Z. En outre la paroi latérale 104 comporte trois fenêtres. Le récipient 103 délimite le pourtour cylindrique du dispositif de purification 100. Le récipient 103 est fermé au niveau de la première extrémité verticale 101 par un culot 105. La paroi latérale 104 et le culot 105 sont réalisés monobloc. Le culot 105 repose dans le renfoncement 41 de la joue inférieure 5. Le récipient 103 est donc un support ajouré définissant un pourtour du dispositif de purification 100 et un compartiment du dispositif de purification 100.

Le récipient 103 présente une ouverture 106 à la deuxième extrémité verticale 102. L'ouverture 106 est délimitée par un bord 107. Dans le cadre de l'exemple illustré sur la figure 4, le récipient 103 comprend, au niveau de l'ouverture 106, une bride 108 configurée pour coopérer avec la bride 23 de la première interface 19a. La bride 108 prend une forme torique vue dans le plan horizontal. Les dimensions mesurées dans un plan horizontal de la bride 108 du dispositif de purification 100 correspondent aux dimensions mesurées dans un plan horizontal de la forme torique de la bride 23 de la première interface 19a. Ainsi, l'écoulement du premier fluide issu de la boucle entre dans le dispositif de purification 100 avant d'entrer dans les premiers tubes de circulation. La bride 108 du récipient 103 est venue de matière avec la paroi de latérale 104. La bride 108 est située à l'extérieur du faisceau 2.

La bride 108 comprend un rail 109 qui accueille un deuxième joint torique 110, qui est aussi un joint d'étanchéité. Le deuxième joint torique peut comprendre par exemple un élastomère. Le rail 109 s'étend circonférentiellement sur une extrémité radiale de la bride 108.

Le dispositif de purification 100 comprend également un filtre. Le filtre prend la forme d'une surface filtrante 111. La surface filtrante 111 est disposée circonférentiellement dans le récipient 103. La surface filtrante 111 présente une porosité de sorte que les particules présentes dans le premier fluide dont la taille pourrait endommager par abrasion l'échangeur thermique 1, par exemple les plaques 3 du faisceau 2 ne puissent pas passer au travers de la surface filtrante 111. La surface filtrante 111 présente une porosité comprise entre 10µm et 500µm. En, d'autres termes une dimension maximum des particules retenues par la surface filtrante est comprise entre 10µm et 500µm. La surface filtrante 111 est agencée dans le récipient 103 de manière à couvrir les fenêtres. La surface filtrante 111 est plaquée contre les fenêtres. La surface filtrante 111 est aussi agencée dans le récipient 103 pour que la majorité de pores soient disposés au droit des fenêtres.

Une méthode de fabrication du dispositif de purification 100 est de disposer la surface filtrante 111 dans un moule puis d'injecter de la matière pour surmouler le récipient 103 sur la surface filtrante 111. La matière peut notamment être de l'aluminium ou un alliage d'aluminium.

Pour éliminer l'eau mélangée au premier fluide, le dispositif de purification 100 comprend par ailleurs un dessicant comportant au moins un élément absorbeur d'eau choisi parmi un gel de silice, un sulfate de magnésium, un chlorure de calcium, un sulfate de calcium, un chlorure de lithium, et un tamis moléculaire, par exemple une zéolithe. Le dessicant comprend une poche (non représentée) perméable au premier fluide dans laquelle est conditionné l'élément absorbeur d'eau . Cette poche est déposée dans le compartiment.

Dans le premier mode de réalisation illustré aux figures 1 et 3, le maintien en position du dispositif de purification 100 dans l'échangeur thermique 1 et le maintien du dispositif de purification 100 à la première interface 19a utilise une douille de fixation 42. La douille de fixation 42 présente une forme générale de bague. Trois pattes de fixation 43 s'étendent depuis un contour supérieur de la douille de fixation 42 vers la bride de connexion 108 du dispositif de purification 100 selon l'axe vertical Z. Un contour inférieur de la douille de fixation 42, opposé au contour supérieur, est brasé à la première bouche supérieure 40a du faisceau 2.

Le maintien en position du dispositif de purification 100 dans l'échangeur thermique 1 et le maintien du dispositif de purification à la première interface 19a requiert aussi une douille de connexion 44. La douille de connexion 44 présente une forme généralement cylindrique à base circulaire. La douille de connexion 44 comprend une gorge 45 agencée circonférentiellement sur la paroi extérieure de la douille de connexion 44 afin de coopérer avec les pattes de fixation 43 de la douille de fixation 42. Lorsque les pattes de fixation 43 de la douille de fixation 42 coopèrent avec la gorge 45, la douille de connexion 44 est sertie au faisceau 2 par l'intermédiaire de la douille fixation 42.

La douille de connexion 44 comprend en outre deux creux 46 agencés sur une partie de la circonférence c'est à dire sur la paroi extérieure de la douille de connexion 44. Les deux creux 46 sont diamétralement opposées par rapport à l'axe vertical Z. Ces creux 46 servent à loger une épingle d'axe 48, par exemple un circlip.

Les creux 46 comporte deux percées débouchant sur la deuxième rainure 25 de la première interface 19a. Les deux percées sont diamétralement opposées. Chaque percée laisse passer une partie de l'épingle d'axe 48 qui vient se loger dans la deuxième rainure 25 de la première interface 19a.

À la suite du sertissage de la douille de connexion 44 à la douille de fixation 42, le dispositif de purification 100 est introduit dans la chambre de distribution 15 par le premier orifice supérieur 36 de la chambre de distribution 15. Le culot 105 du récipient 103 vient alors en contact du renfoncement 41. La bride 108 du dispositif de purification 100 se retrouve à l'extérieur de la chambre de distribution 15 et à l'intérieur de la douille de connexion 44. Puis, la première interface 19a est insérée dans la douille de connexion 44 de sorte que la bride 23 de la première interface 19a coopère avec la bride 108 du dispositif de purification 100. Ensuite, l'épingle d'axe 48 est positionnée dans les creux 46, et chaque percée est alors traversée par une partie de l'épingle d'axe 48 pour se loger dans la deuxième rainure 25. L'épingle d'axe 48 est déformée élastiquement ce qui assure le maintien en position de la première interface 19a et du dispositif de purification 100 à la douille de connexion 44. L'étanchéité entre le faisceau 2 et le dispositif de purification 100 est assuré par le deuxième joint torique 110 logé dans le rail 109 dont la compression est assurée par la mise en position de l'épingle d'axe 48. L'étanchéité entre la douille de connexion 44 et la première interface 19a est assurée par le premier joint torique 26 logé dans la première rainure 24 dont la compression est assurée par l'épingle d'axe 48 qui permet donc de maintenir l'ensemble dispositif de purification 100 et première interface 19a dans l'échangeur thermique 1. Autrement dit, la liaison étanche entre le faisceau 2, le dispositif de purification 100 et la première interface 19a est assurée par la compression des deux joints toriques grâce à l'épingle d'axe 48.

Dans ce mode de réalisation, le système de verrouillage du dispositif de purification 100 qui permet de fixer le dispositif de purification 100 au faisceau 2 de plaques 3, comprend la douille de fixation 42, la douille de connexion 44, le rail 109 avec le joint torique 110, et l'épingle d'axe 48.

Afin de changer le dispositif de purification 100 de l'échangeur thermique 1 de ce premier mode de réalisation, il faut tout d'abord retirer l'épingle d'axe 48. En retirant l'épingle d'axe 48, la première interface 19a et le dispositif de purification 100 sont désolidarisés de la douille de connexion 44 et donc du faisceau 2 de plaques 3. L'échangeur thermique 1 peut alors être purgé du premier fluide. Ensuite, le dispositif de purification 100 peut être extrait par le premier orifice supérieur 36 de la première chambre de distribution 15. Une fois le dispositif de purification 100 extrait, la première chambre de distribution 15 est vide et prête à accueillir un autre dispositif de purification 100.

La figure 5 montre un deuxième mode de réalisation du dispositif de purification selon l'invention. Ce deuxième mode de réalisation montre qu'il est possible d'adapter la forme du récipient à la forme de la première chambre de distribution. Le deuxième mode de réalisation illustré sur la figure 5 est identique au premier mode de réalisation décrit à l'exception des trous 35 des plaques 3, de la forme du récipient 103 du dispositif de purification 100, et du dispositif de perturbation 34 du premier mode de réalisation. Pour les éléments identiques, on se reportera à la description des figures 1 à 4 décrites ci-dessus.

En référence à la figure 5, les trous 235a des plaques 3 du faisceau 2 présentent une forme sensiblement triangulaire. La première chambre de distribution 15 présentent alors une forme de cylindre droit à base triangulaire. La deuxième chambre de distribution et les chambres d'évacuation peuvent aussi présenter une forme de cylindre droit à base triangulaire si tous les trous correspondants des plaques 3 du faisceau 2 présentent une forme sensiblement triangulaire.

L'échangeur thermique 1 comprend un dispositif de purification 200 configuré pour coopérer avec la chambre de distribution 15. Pour pouvoir accommoder le dispositif de purification 200 dans chambre de distribution la forme du récipient 204 du dispositif de purification 200 est alors aussi un cylindre droit à base triangulaire. Le récipient est surmonté d'une bride torique comme dans le premier mode de réalisation.

Comme illustré sur la figure 5, le dispositif de perturbation 134 peut prendre une autre forme tel que des plots 50 répartis uniformément sur la face inférieure 33. Il peut aussi être disposé sur la face supérieure de la plaque 3. Ces plots 50 s'étendent depuis la face inférieure selon l'axe vertical Z. Le dispositif de perturbation 134 comprend un muret 51 qui s'étend de la première extrémité longitudinale 10 au voisinage de la deuxième extrémité longitudinale de la plaque 3. Il s'étend depuis la face inférieure 33 selon l'axe vertical Z. Chaque muret 51 divise la face inférieure 33 de la plaque 3 en deux parties égales.

Le montage et le démontage de l'échangeur thermique 1 dans ce deuxième mode de réalisation est identique au montage et démontage du premier mode de réalisation explicité ci-avant.

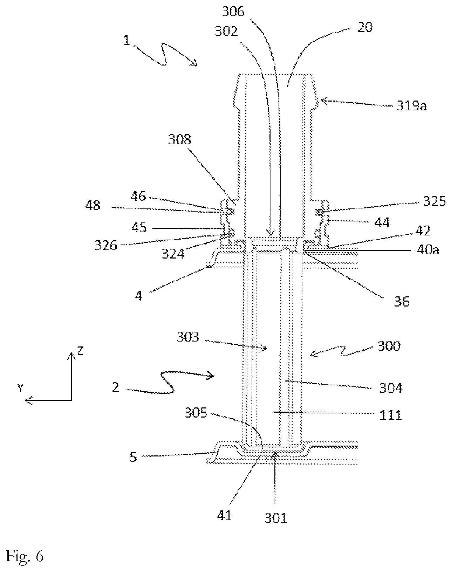

La figure 6 illustre un troisième mode de réalisation du dispositif de purification selon l'invention. Ce troisième mode de réalisation vise à diminuer le nombre de pièces à assembler pour mettre le dispositif de purification 300 dans l'échangeur thermique 1, en faisant du dispositif de purification 300 et de la première interface 319a une pièce venue de matière et donc monobloc. Le troisième mode de réalisation illustré sur la figure 6 est identique au premier mode de réalisation à l'exception du dispositif de purification et de la première interface dans le premier mode de réalisation. Pour plus de clarté, les plaques 3 ont été omises sur la figure 6. Pour les éléments identiques, on se reportera à la description des figures 1 à 4 décrites ci-dessus.

Comme illustré sur la figure 6, l'échangeur thermique 1 comprend un dispositif de purification 300 disposé dans la première chambre de distribution. Au moins une partie du dispositif de purification 300 comprend une forme sensiblement complémentaire à une forme de la première chambre de distribution dans laquelle il est en partie agencé. La première chambre de distribution étant un cylindre droit à base circulaire, le dispositif de purification 300 présente donc une partie en forme de cylindre droit à base circulaire. Le dispositif de purification 300 s'étend selon une direction d'extension sensiblement parallèle à l'axe vertical Z. Le dispositif de purification 300 présente une première extrémité verticale 301 et une deuxième extrémité verticale 302 opposée à la première extrémité vertical 301 selon l'axe vertical Z.

Le dispositif de purification 300 comprend un récipient 303 comportant une paroi latérale 304. La paroi latérale 304 présente une forme de section circulaire et globalement symétrique autour de l'axe vertical Z. En outre la paroi latérale 304 comporte trois fenêtres. Le récipient 303 délimite le pourtour cylindrique du dispositif de purification 300. Le récipient 303 est fermé au niveau de la première extrémité verticale 301 par un culot 305. La paroi latérale 304 et le culot 305 sont réalisés monobloc. Le culot 305 repose dans le renfoncement 41 de la joue inférieure 5. Le récipient 303 est donc un support ajouré définissant un pourtour du dispositif de purification 300 et un compartiment du dispositif de purification 300.

Le récipient 303 présente une ouverture 306 à la deuxième extrémité verticale 302. Dans le cadre de l'exemple illustré sur la figure 4, le récipient 303 comprend une bride 308 au niveau de l'ouverture 306. La bride 308 s'étend radialement par rapport à l'axe vertical Z. La bride 308 du récipient 303 est venue de matière avec la paroi de latérale 304. La bride 308 est située à l'extérieur du faisceau 2 de plaques 3.

L'ouverture 306 est surmontée de la première interface 319a. La première interface 319a présente la forme d'un manchon ayant un passage 20. Ainsi, l'écoulement du premier fluide issu de la boucle entre dans le dispositif de purification 300 avant d'entrer dans les premiers tubes de circulation. Le récipient 303 et la première interface 319a sont réalisés venu de matière, c'est-à-dire qu'il forme un monobloc autrement dit un seul bloc de matière. Ce ne sont plus deux pièces distinctes comme dans le premier mode de réalisation.

Le système de verrouillage du dispositif de purification 300 au faisceau 2 de plaques 3 est situé au niveau de la bride 308. Il comprend une première rainure 324 qui accueille un joint torique 326, qui est un organe d'étanchéité. Le joint torique 326 peut comprendre par exemple un élastomère. La première rainure 324 s'étend circonférentiellement sur une extrémité radiale de la bride 308.

Le système de verrouillage du dispositif de purification 300 comporte en outre une deuxième rainure 325 au voisinage de la première rainure 324. La deuxième rainure 325 est agencée circonférentiellement sur l'extérieur de la bride 308. La deuxième rainure 325 accueille au moins en partie une épingle d'axe 48. La deuxième rainure 325 est disposée entre la deuxième extrémité 304 et la première rainure 325 selon l'axe vertical Z.

Le dispositif de purification 300 comprend également un filtre prenant la forme d'une surface filtrante identique à la surface filtrante 111 décrite dans le premier mode de réalisation.

Une méthode de fabrication du dispositif de purification 300 est de disposer la surface filtrante 111 dans un moule puis d'injecter de la matière pour surmouler le récipient 303 sur la surface filtrante 111 ainsi que la première interface 319a. La matière peut notamment être de l'aluminium ou un alliage d'aluminium.

Pour éliminer l'eau mélangée au premier fluide, le dispositif de purification 300 comprend au moins un dessicant logé dans le récipient 303. Le dessicant du dispositif de purification 300 est identique à celui décrit dans le premier mode de réalisation.

Dans le troisième mode de réalisation illustré à la figure 6, le système de verrouillage du dispositif de purification 300 comporte aussi la douille de fixation 42 décrite dans le premier mode de réalisation.

Le maintien en position du dispositif de purification 300 venu de matière avec la première interface 319a au faisceau 2 requiert que le système de verrouillage comprenne aussi la douille de connexion 44 décrite dans le premier mode de réalisation. Dans le mode de réalisation illustré sur la figure 6, les deux percées des creux 46 de la douille de connexion 44 débouchent sur la deuxième rainure 325 de la bride 308. Chaque percée laisse passer une partie de l'épingle d'axe 48 du système de verrouillage qui vient se loger dans la deuxième rainure 325.

À la suite du sertissage de la douille de connexion 44 à la douille de fixation 42, le dispositif de purification 300 est introduit dans la chambre de distribution par le premier orifice supérieur 36 de la chambre de distribution. Le culot 305 du récipient 303 vient alors en contact du renfoncement 41. La bride 308 du dispositif de purification 300 se retrouve à l'extérieur de la chambre de distribution et à l'intérieur de la douille de connexion 44. Ensuite, l'épingle d'axe 48 est positionnée dans les creux 46, et chaque percée est alors traversée par une partie de l'épingle d'axe 48 pour se loger dans la deuxième rainure 325. L'épingle d'axe 48 est déformée élastiquement ce qui assure le maintien en position du dispositif de purification 300 monobloc avec la première interface 319a dans l'échangeur thermique grâce à la douille de connexion 44.

L'étanchéité entre le faisceau 2 et le dispositif de purification 300 est assuré par le joint torique 326 logé dans la première rainure 324 dont la compression est assurée par la mise en position de l'épingle d'axe 48. L'étanchéité entre la douille de connexion 44 et la première interface 319a est assurée par le joint torique 326 logé dans la première rainure 324 dont la compression entre la bride 308 et la douille de connexion 44 est assurée par l'épingle d'axe 48 qui permet donc de maintenir le dispositif de purification 300 venu de matière avec la première interface 319a au faisceau 2 de l'échangeur thermique 1.

Autrement dit, la liaison étanche entre le faisceau 2 et le dispositif de purification 300 est assurée par la compression du joint torique 326 faite par la mise en position de l'épingle d'axe 48 dans la deuxième rainure 325.

Afin de changer le dispositif de purification 300 de l'échangeur thermique 1 de ce troisième mode de réalisation, il faut tout d'abord retirer l'épingle d'axe 48. En retirant l'épingle d'axe 48, le dispositif de purification 300 est désolidarisé de la douille de connexion 44 et donc du faisceau 2 de plaques 3. L'échangeur thermique 1 peut alors être purgé du premier fluide. Ensuite, le dispositif de purification 300 peut être extrait en orientant le premier orifice supérieur 36 de la première chambre de distribution. Une fois le dispositif de purification 300 extrait, la première chambre de distribution est vide et prête à accueillir un autre dispositif de purification 300.

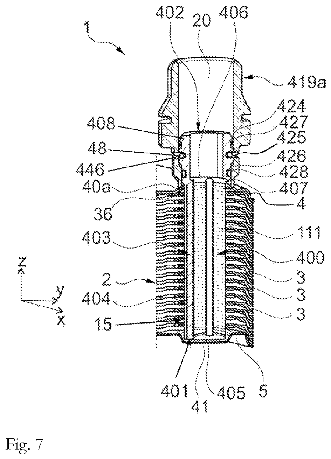

La figure 7 illustre un quatrième mode de réalisation du dispositif de purification 400 selon l'invention. Ce quatrième mode de réalisation vise notamment à diminuer le nombre de pièces à assembler pour mettre le dispositif de purification 400 dans l'échangeur thermique 1, en éliminant la douille de fixation 42 et la douille de connexion 44 du premier mode réalisation. Le quatrième mode de réalisation illustré sur la figure 7 est identique au premier mode de réalisation à l'exception du dispositif de purification 400 et de la première interface 419a. Pour les éléments identiques, on se reportera à la description des figures 1 à 4 décrites ci-dessus.

Comme illustré sur la figure 7, l'échangeur thermique 1 comprend un dispositif de purification 400 disposé dans la première chambre de distribution 15. Au moins une partie du dispositif de purification 400 comprend une forme sensiblement complémentaire à une forme de la première chambre de distribution 15 dans laquelle il est en partie agencé. La première chambre de distribution 15 étant un cylindre droit à base circulaire, le dispositif de purification 400 présente donc une partie en forme de cylindre droit à base circulaire.

Le dispositif de purification 400 s'étend selon une direction d'extension sensiblement parallèle à l'axe vertical Z. Le dispositif de purification 400 présente une première extrémité verticale 401 et une deuxième extrémité verticale 402 opposée à la première extrémité vertical 401 selon l'axe vertical Z.

Le dispositif de purification 400 comprend un récipient 403 comportant une paroi latérale 404. La paroi latérale 404 présente une forme de section circulaire et globalement symétrique autour de l'axe vertical Z. En outre la paroi latérale 404 comporte trois fenêtres. Le récipient 403 délimite le pourtour cylindrique du dispositif de purification 400. Le récipient 403 est fermé au niveau de la première extrémité verticale 401 par un culot 405. La paroi latérale 404 et le culot 405 sont réalisés monobloc. Le culot 405 repose dans le renfoncement 41 de la joue inférieure 5. Le récipient 403 est donc un support ajouré définissant un pourtour du dispositif de purification 400 et un compartiment du dispositif de purification 400.

Le récipient 403 présente une ouverture 406 à la deuxième extrémité verticale 402. L'ouverture 406 est délimitée par un bord 407. Dans le cadre de l'exemple illustré sur la figure 7, le récipient 403 comprend une collerette 408 qui s'étend sensiblement verticalement selon l'axe vertical Z à partir du bord 407 vers le côté opposé au récipient 403. La collerette 408 présente un diamètre supérieur à un diamètre du récipient 403 vu dans le plan horizontal tel que défini auparavant. La collerette 408 est venue de matière avec le récipient 403. La collerette 408 est située à l'extérieur du faisceau 2 de plaques 3 lorsque le dispositif de purification 400 est en place dans l'échangeur thermique 1.

La collerette 408 coopère avec la première interface 419a pour que l'écoulement du premier fluide issu de la boucle entre dans le dispositif de purification 400 avant d'entrer dans les premiers tubes de circulation. Ainsi la collerette 408 est logée à l'intérieur du passe 20 de la première interface 419a.

La collerette 408 du dispositif de purification 400 comprend un système de verrouillage du dispositif de purification 400 à la première interface 419a. Le système de verrouillage comporte une première rainure 424 qui accueille un premier joint torique 427 qui est un organe d'étanchéité. Le premier joint torique 427 peut comprendre par exemple un élastomère. La première rainure 424 s'étend circonférentiellement sur une extrémité radiale de la collerette 408.

Le système de verrouillage de la collerette 408 comprend une deuxième rainure 425 au voisinage de la première rainure 424. La deuxième rainure 425 est agencée circonférentiellement sur l'extérieur de la collerette 408. La deuxième rainure 425 accueille une épingle d'axe 48.

Le système de verrouillage de la collerette 408 comprend une troisième rainure 426 au voisinage de la deuxième rainure 425. La troisième rainure est agencée circonférentiellement sur une extrémité radiale de la collerette 408. La deuxième rainure 425 est disposée entre la première rainure 424 et le troisième rainure 426 selon l'axe vertical Z. La troisième rainure 426 loge un deuxième joint torique 428 qui est un organe d'étanchéité. Le deuxième joint torique 428 peut comprendre un élastomère.

Le dispositif de purification 400 comprend également un filtre. Le filtre comporte une surface filtrante, laquelle est identique à la surface filtrante 111 du premier mode de réalisation.

Une méthode de fabrication du dispositif de purification 400 est de disposer la surface filtrante 111 dans un moule puis d'injecter de la matière pour surmouler le récipient 403 sur la surface filtrante 111 avec la collerette 408. La matière peut notamment être de l'aluminium ou un alliage d'aluminium.

Pour éliminer l'eau mélangée au premier fluide, le dispositif de purification 400 comprend au moins un dessicant logé dans le récipient 403. Le dessicant du dispositif de purification 400 est identique à celui décrit dans le premier mode de réalisation.

La première interface 419a présente la forme générale d'un manchon ayant un passage 20. Un diamètre du passage 20 est supérieur à un diamètre de la collerette 418 dans le plan horizontal. La première interface 419a comprend deux creux 446 agencés radialement sur une paroi extérieure du manchon. Les deux creux 446 sont diamétralement opposés par rapport à l'axe vertical Z. Ces creux 446 servent à loger l'épingle d'axe 48.

Les creux 446 comporte deux percées débouchant sur la deuxième rainure 425 de la première interface 419a. Les deux percées sont diamétralement opposées. Chaque percée laisse passer une partie de l'épingle d'axe 48 qui vient se loger dans la deuxième rainure 425 de la première interface 419a.

Le maintien en position du dispositif de purification 400 dans la première chambre de distribution 15 de l'échangeur thermique 1 requiert dans une première étape le brasage de la première interface 419a à la joue supérieure 4 de manière à ce que le passage 20 soit en communication avec la première bouche supérieure 40a. Dans une deuxième étape, le dispositif de purification 400 est introduit dans la première chambre de distribution 15 en le faisant passer le passage 20. Une troisième étape consiste à insérer l'épingle d'axe 48 dans les deux creux 446 de la première interface 419a, chaque percée est alors traversée par une partie de l'épingle d'axe 48 pour se loger dans la deuxième rainure 425. L'épingle d'axe 48 est déformée élastiquement ce qui assure le maintien en position du dispositif de purification 400 avec la première interface 419a dans l'échangeur thermique 1. L'étanchéité entre le faisceau 2 et le dispositif de purification 400 est assuré par le premier joint torique 427 et le deuxième joint torique 428 logés respectivement dans la première rainure 424 et la troisième rainure 426. Leur compression entre la collerette 408 et le passage 20 est assurée par la mise en position de l'épingle d'axe 48 dans la deuxième rainure 425.

Afin de changer le dispositif de purification 400 de l'échangeur thermique 1 de ce quatrième mode de réalisation, il faut tout d'abord retirer l'épingle d'axe 48. En retirant l'épingle d'axe 48, le dispositif de purification 400 est désolidarisé de la première interface 419a et donc du faisceau 2 de plaques 3. L'échangeur thermique 1 peut alors être purgé du premier fluide. Ensuite, le dispositif de purification 400 peut être extrait de la première chambre de distribution 15. Une fois le dispositif de purification 400 extrait, la première chambre de distribution 15 est vide et prête à accueillir un autre dispositif de purification 400.

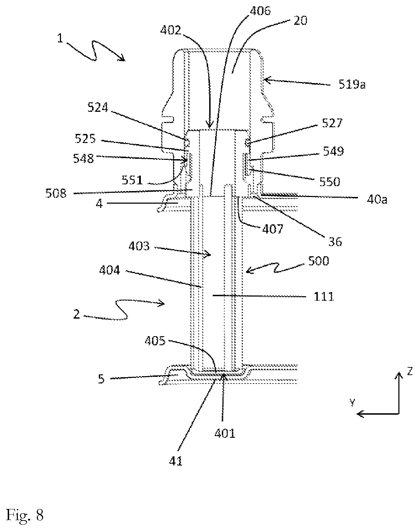

La figure 8 illustre est un cinquième mode de réalisation du dispositif de purification selon l'invention. Ce cinquième mode de réalisation est une solution alternative à l'épingle d'axe 48 du quatrième mode réalisation. Le cinquième mode de réalisation illustré sur la figure 8 est identique au quatrième mode de réalisation à l'exception de la collerette 408 et de la première interface 419a du quatrième mode de réalisation. Pour plus de clarté, les plaques 3 ont été omises sur la figure 8. Pour les éléments identiques, on se reportera à la description des figures 1 à 4 et à la figure 7 décrites ci-dessus.

Comme illustré sur la figure 8, la collerette 508 du dispositif de purification 500 de l'échangeur thermique 1 est située à l'extérieur du faisceau 2 de plaques lorsque le dispositif de purification 500 est en position dans l'échangeur thermique 1.

La collerette 508 coopère avec la première interface 519a pour que l'écoulement du premier fluide issu de la boucle entre dans le dispositif de purification 500 avant d'entrer dans les premiers tubes de circulation.

La collerette 508 comprend un système de verrouillage du dispositif de purification 500 à la première interface 519a. Le système de verrouillage comprend une rainure 524 qui accueille un joint torique 527 qui est un organe d'étanchéité. Le joint torique 527 peut comprendre par exemple un élastomère. La rainure 524 s'étend circonférentiellement sur une extrémité radiale de la collerette 508.

Le système de verrouillage de la collerette 508 du dispositif de purification 500 comprend des organes de maintien 548 au voisinage de la rainure 524. Chaque organe de maintien 548 est agencé depuis une bordure inférieure 525 de la rainure. Chaque organe de maintien 548 se présente sous la forme d'une lame 549 qui s'étend depuis la bordure inférieure 525 vers le faisceau 2 selon l'axe vertical Z. Une extrémité libre de la lame 549 comprend un ergot 550. L'ergot 550 s'étend de l'extrémité libre de la lame vers le côté opposé à la collerette 508. Les organes de maintien 548 bloque le dispositif de purification 500 dans l'échangeur thermique 1 lorsque le dispositif de purification 500 est en position dans l'échangeur thermique 1. Les organes de maintien 548 sont au nombre de trois. Ils sont répartis uniformément sur la bordure inférieure 525.

Comme le montre la figure 8, la première interface 519a présente la forme générale d'un manchon ayant un passage 20. Le manchon présente la forme générale d'un cylindre droit à base circulaire selon l'axe vertical Z. Le passage 20 comprend une restriction de section selon l'axe vertical Z. Ainsi, une section d'une portion du passage 20 proche du faisceau 2 est plus grande qu'une section d'une autre portion du passage 20 éloignée du faisceau 2. Cette restriction de section créée un épaulement 551.

Le maintien en position du dispositif de purification 500 dans la première chambre de distribution de l'échangeur thermique 1 requiert dans une première étape le brasage de la première interface 519a à la joue supérieure 4 de manière à ce que le passage 20 soit en communication avec la première bouche supérieure 40a et donc la première chambre de distribution. Dans une deuxième étape, le dispositif de purification 500 est introduit dans la première chambre de distribution en le faisant passer le passage 20 jusqu'à ce que les organes de fixation 548 coopère avec l'épaulement 551. En d'autres termes, les organes de fixation 548 s'encliquètent après que les ergots 550 ait dépassé l'épaulement 551 lors de l'insertion du dispositif de purification 500. L'étanchéité entre le faisceau 2 et le dispositif de purification 500 est assuré par le joint torique 527 qui est compressé entre la collerette 508 et le passage 20.

Afin de changer le dispositif de purification 500 de l'échangeur thermique 1 de ce cinquième mode de réalisation, le dispositif de purification 500 est désencliquetté, le dispositif de purification 500 peut alors être extrait de la première chambre de distribution. Une fois le dispositif de purification 500 extrait, la première chambre de distribution est vide et prête à accueillir un autre dispositif de purification 500.

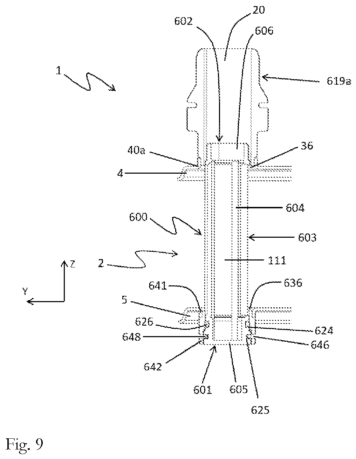

La figure 9 illustre un sixième mode de réalisation du dispositif de purification selon l'invention. Ce sixième mode de réalisation illustre l'insertion du dispositif de purification 600 à l'opposé du premier orifice supérieur 36 selon l'axe vertical Z. Le sixième mode de réalisation illustré sur la figure 9 est identique au premier mode de réalisation décrit à l'exception du renfoncement 41 du premier mode de réalisation, de la première interface 19a du premier mode de réalisation et dispositif de purification 100 du premier mode de réalisation. Pour les éléments identiques, on se rapportera à la description des figures 1 à 4 décrites ci-dessus. Pour plus de clarté sur la figure 9, les plaques du faisceau 2 ne sont pas représentées.

En référence à la figure 9, la première interface 619a présente la forme générale d'un manchon ayant un passage 20. Le manchon présente la forme générale d'un cylindre droit à base circulaire. Le passage 20 est droit.

La première interface est brasée à la joue supérieure 4 de sorte que le passage 20 est en communication avec la première bouche supérieure 40a et donc avec le premier orifice supérieur 36 de la première chambre de distribution. La première bouche supérieure 40a est donc une ouverture d'admission du premier fluide dans la première chambre de distribution du faisceau 2 de l'échangeur thermique 1.

Comme le montre la figure 9, la joue inférieur 5 comprend une première bouche inférieure 641 disposée au droit des trous 35a. La première bouche inférieur 641 délimite un premier orifice inférieur 636 de la première chambre de distribution.

Comme illustré sur la figure 9, l'échangeur thermique 1 comprend un dispositif de purification 600 disposé dans la première chambre de distribution. Au moins une partie du dispositif de purification 600 comprend une forme sensiblement complémentaire à une forme de la première chambre de distribution dans laquelle il est en partie agencé. La première chambre de distribution étant un cylindre droit à base circulaire, le dispositif de purification 600 présente donc une partie en forme de cylindre droit à base circulaire. Le dispositif de purification 600 s'étend selon une direction d'extension sensiblement parallèle à l'axe vertical Z. Le dispositif de purification 600 présente une première extrémité verticale 601 et une deuxième extrémité verticale 602 opposée à la première extrémité vertical 601 selon l'axe vertical Z.

Le dispositif de purification 600 comprend un récipient 603 comportant une paroi latérale 604. La paroi latérale 604 présente une forme de section circulaire et globalement symétrique autour de l'axe vertical Z. En outre la paroi latérale 604 comporte trois fenêtres. Le récipient 603 délimite le pourtour cylindrique du dispositif de purification 600. Le récipient 603 est fermé au niveau de la première extrémité verticale 601 par un culot 605. Le dispositif de purification 600 comporte donc un bouchon en la forme du culot 605 à une extrémité opposée à une ouverture d'admission du fluide. La paroi latérale 604 et le culot 605 sont réalisés monobloc. Le récipient 603 est donc un support ajouré définissant un pourtour du dispositif de purification 600 et un compartiment du dispositif de purification 600.

La deuxième extrémité verticale 602 est logée en partie dans la première interface 619a, plus précisément dans le passage 20. Le récipient 603 présente une ouverture 606 à la deuxième extrémité verticale 602. Ainsi le premier fluide entrant dans le passage 20 de la première interface 619a est filtré avant de pénétrer dans le premier chemin de circulation 6.

Le culot 605 comprend un dispositif de fixation du dispositif de purification 600 au niveau de la première bouche inférieure 641. Le dispositif de fixation comprend une première rainure 624 qui loge un joint torique 626 qui est un organe d'étanchéité. Le joint torique 626 peut comprendre par exemple un élastomère. La première rainure 624 s'étend circonférentiellement sur une extrémité radiale du culot 605 par rapport à l'axe vertical Z.

Le dispositif de fixation comprend par ailleurs une deuxième rainure 625 qui accueille au moins en partie une épingle d'axe 648. La deuxième rainure 625 est au voisinage de la première rainure 624. La première rainure 624 est agencée entre le faisceau 2 et la deuxième rainure 625 selon l'axe vertical Z.

Le dispositif de fixation comprend en outre une épingle d'axe 648 comme par exemple un circlip. L'épingle d'axe 648 coopère avec la première rainure 625.

Le dispositif de purification 600 comprend également un filtre qui comporte une surface filtrante identique à la surface filtrante 111 décrite dans le premier mode de réalisation.

Pour éliminer l'eau mélangée au premier fluide, le dispositif de purification 600 comprend au moins un dessicant logé dans le récipient 603. Le dessicant du dispositif de purification 600 est identique à celui décrit dans le premier mode de réalisation.

Une méthode de fabrication du dispositif de purification 600 est de disposer la surface filtrante 111 dans un moule puis d'injecter de la matière pour surmouler le récipient 603 sur la surface filtrante 111. La matière peut notamment être de l'aluminium ou un alliage d'aluminium.

Dans le sixième mode de réalisation illustré à la figure 9, le maintien en position du dispositif de purification 600 dans l'échangeur thermique 1 nécessite une douille de maintien 642. La douille de maintien 642 présente une forme généralement cylindrique à base circulaire. La douille de maintien 642 comprend deux creux 646 agencés sur une partie de la circonférence c'est à dire sur la paroi extérieure de la douille de maintien 642. Les deux creux 646 sont diamétralement opposées par rapport à l'axe vertical Z. Ces creux 646 servent à loger l'épingle d'axe 648.

Les creux 646 comporte deux percées débouchant sur la première rainure 624 du culot 605. Les deux percées sont diamétralement opposées. Chaque percée laisse passer une partie de l'épingle d'axe 648 qui vient se loger dans la deuxième rainure 625 du culot 605.

La douille de maintien 642 est brasée avec la première bouche inférieure 641 pour la fixer sur joue inférieure 5 et autour du premier orifice inférieur 636 de la chambre de distribution. Le dispositif de purification 600 est introduit dans la chambre de distribution par le premier orifice inférieur 636 de la chambre de distribution. L'orifice du récipient 606 est logée dans le passage 20 de la première interface 619a. Une paroi de fond du culot 605 s'étend dans le plan horizontal et vient affleurer le côté intérieur de la douille de maintien 642. Ensuite, l'épingle d'axe 648 est positionnée dans les creux 646, et chaque percée est alors traversée par une partie de l'épingle d'axe 648 pour se loger dans la deuxième rainure 625 du capot. L'épingle d'axe 648 est déformée élastiquement ce qui assure le maintien en position du dispositif de purification 600 à la douille de maintien 642 et donc au faisceau 2. L'étanchéité entre le faisceau 2 et le dispositif de purification 600 est assuré par le joint torique 626 logé dans la première rainure 624 dont la compression entre la douille de maintien 642 et le culot 605 est assurée par la mise en position de l'épingle d'axe 648.

Afin de changer le dispositif de purification 600 de l'échangeur thermique 1 de ce sixième mode de réalisation, il faut tout d'abord retirer l'épingle d'axe 648. En retirant l'épingle d'axe 48, le dispositif de purification 600 est désolidarisé de la douille de maintien 642 et donc du faisceau 2. L'échangeur thermique 1 peut alors être purgé du premier fluide. Ensuite, le dispositif de purification 600 peut être extrait par le premier orifice inférieur 636 de la première chambre de distribution. Une fois le dispositif de purification 600 extrait, la première chambre de distribution est vide et prête à accueillir un autre dispositif de purification 600.

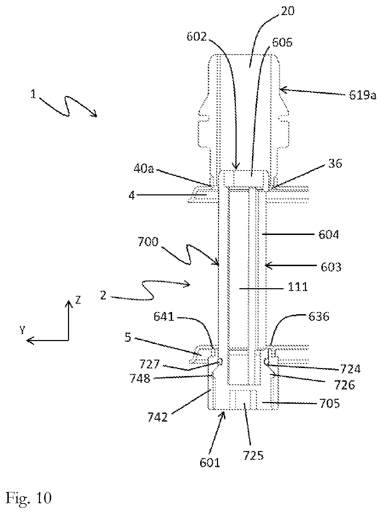

La figure 10 illustre un septième mode de réalisation du dispositif de purification selon l'invention. Ce septième mode de réalisation est identique au sixième mode de réalisation décrit à l'exception du culot 705 et du dispositif de fixation, et de la douille de maintien 742. Pour les éléments identiques, on se rapportera à la description de la figure 9 décrite ci-dessus. Les plaques du faisceau 2 ne sont pas représentées sur la figure 10 pour plus de clarté.

En référence à la figure 10, la douille de maintien 742 présente une forme générale de cylindrique creux à base circulaire. La douille de maintien 742 comprend un taraudage 743 à l'intérieur du cylindre creux. Le taraudage 743 est configuré pour coopérer avec un filetage du culot 705.

Le dispositif de fixation, et donc le culot, comprend une tête de vis 725. La tête de vis étant à la première extrémité 601 du dispositif de purification 700. Il comprend en outre un filetage 726 qui s'étend circonférentiellement sur une extrémité radiale du culot 705. Le dispositif de fixation comprend en outre une rainure 724 qui loge un joint torique 727 qui est un organe d'étanchéité. Le joint torique 727 peut comprendre par exemple un élastomère. La rainure 724 s'étend circonférentiellement sur une extrémité radiale du culot 705 par rapport à l'axe vertical Z. La rainure 724 est agencée entre le filetage 726 et le faisceau 2.

La douille de maintien 742 est brasée avec la première bouche inférieure 641 pour la fixer autour du premier orifice inférieur 636 de la première chambre de distribution. Le dispositif de purification 700 est introduit dans la chambre de distribution 15 par le premier orifice inférieur 636 de la chambre de distribution 15. Le culot 705 est alors vissé pour que l'orifice du récipient 606 soit logée dans le passage 20 de la première interface 619a et le dispositif de purification 700 au moins logé en partie dans la première chambre de distribution. L'étanchéité entre le faisceau 2 et le dispositif de purification 700 est assuré par le joint torique 727 logé dans la rainure 724 dont la compression est assurée par la mise en position du culot 705 dans la douille de maintien 742.

Afin de changer le dispositif de purification 700 de l'échangeur thermique 1 de ce septième mode de réalisation, il suffit de dévisser le culot 705 en utilisant un outil de serrage qui pourra coopérer avec la tête de vis 725. Une fois le dispositif de purification 700 extrait, la première chambre de distribution est vide et prête à accueillir un autre dispositif de purification 700.

L'échangeur thermique 1 ainsi agencé est apte à fonctionner selon l'exemple suivant en prenant les références du premier mode de réalisation. Cet exemple n'est pas limitatif, il peut être appliqué aux autres modes de réalisation décrits.

En outre, d'autres fonctionnements peuvent être envisagés. Parmi ces fonctionnements, on trouvera la possibilité d'agencer les circuits de façon à y faire circuler les fluides en plusieurs passes.

En s'appuyant sur le premier mode de réalisation décrit, illustré sur les figures 1 à 4, le premier fluide entre dans l'échangeur thermique 1 par la première interface 19a. le premier fluide est alors filtré par le dispositif de purification 100 lorsqu'il rentre dans la première chambre de distribution 15. Puis, le premier fluide circule dans le premier chemin de circulation 6 vers la quatrième interface 19d en une seule passe. La circulation du premier fluide est perturbée par les dispositifs de perturbation 34. Le premier fluide est ensuite évacué hors de la quatrième interface 19d vers une boucle couplée thermiquement à un dispositif de stockage électrique.

Le deuxième fluide entre dans l'échangeur thermique 1 par la deuxième interface 19b. Le deuxième fluide circule dans le deuxième chemin de circulation 7 via la deuxième chambre de distribution 17. Le premier fluide circulant dans le premier chemin de circulation 6 transfère alors ses calories au deuxième fluide. Ce transfert de calories se traduit par un refroidissement du premier fluide, qui passe de l'état gazeux à un état diphasique gaz-liquide puis à un état liquide. L'écoulement du deuxième fluide est perturbé par les dispositifs de perturbation 34 présent dans le deuxième chemin de circulation 7. Le deuxième fluide est évacué par la suite de l'échangeur thermique 1 via la troisième interface 19c.

Les différents modes de réalisation décrits peuvent être mise en œuvre pour une chambre d'évacuation. Par exemple, en plus de la première chambre de distribution 15, la première chambre d'évacuation 16 comprend notamment un deuxième dispositif de purification selon l'un quelconque des modes de réalisation décrits ci-avant. Ce deuxième dispositif de purification peut comprendre un filtre sous la forme d'une surface filtrante et/ou un compartiment configuré pour loger un dessicant en cas de forte probabilité que de l'eau puisse s'infiltrer dans la boucle. Cela peut être notamment le cas des pays chaud à fort taux d'humidité.

Il est aussi possible de mettre un dispositif de purification selon l'un des modes de réalisation décrits précédemment dans la deuxième chambre de distribution 17 et/ou dans la deuxième chambre d'évacuation 18.

Bien sûr, l'invention n'est pas limitée aux exemples qui viennent d'être décrits et de nombreux aménagements peuvent être apportés à ces exemples sans sortir du cadre de l'invention tel que défini dans les revendications annexées.

## Revendications

1. Échangeur thermique (1) pour véhicule automobile, comprenant une pluralité de plaques (3), les plaques (3) étant empilées les unes sur les autres selon une direction d'empilement (E) pour former un faisceau (2) de plaques (3), au moins une première plaque (3) et au moins une deuxième plaque (3) définissent un premier chemin de circulation (6) configuré pour une circulation d'un premier fluide, au moins la deuxième plaque (3) et au moins une troisième plaque (3) définissent un deuxième chemin de circulation (7) configuré pour une circulation d'un deuxième fluide, le faisceau (2) de plaques (3) comprenant une première chambre de distribution (15) configurée pour alimenter en premier fluide le premier chemin de circulation (6), et une deuxième chambre de distribution (17) configurée pour alimenter en deuxième fluide le deuxième chemin de circulation (7), **caractérisé en ce que** l'échangeur thermique (1) comprend au moins un dispositif de purification (100, 200, 300, 400, 500, 600, 700) logé dans l'une des chambres de distribution (15, 17) et configuré pour retirer l'eau qui se serait introduite dans l'échangeur thermique et ainsi empêcher la conduction d'électricité.

2. Échangeur thermique (1) selon la revendication précédente, dans lequel l'échangeur thermique (1) comprend une interface (19a, 19b) apte à coopérer avec un orifice (36, 37) de la chambre de distribution (15, 17) logeant le dispositif de purification (100, 200, 300, 400, 500, 600, 700) et avec le dispositif de purification (100, 200, 300, 400, 500, 600, 700).

3. Échangeur thermique (1) selon la revendication précédente, dans lequel l'interface (19a, 19b) est monobloc avec au moins une partie du dispositif de purification (100, 200, 300).

4. Échangeur thermique (1) selon l'une des revendications précédentes, dans lequel la chambre de distribution (15, 17) logeant le dispositif de purification (100, 200, 300, 400, 500, 600, 700) comprend une première et une deuxième extrémité, la première extrémité étant ouverte sur un environnement extérieur du faisceau (2) selon l'axe d'empilement (E).

5. Échangeur thermique (1) selon la revendication précédente, dans lequel le faisceau (2) présente une bouche (40a, 40b) à une extrémité, la bouche (40a, 40b) est configurée pour admettre le fluide et pour manipuler le dispositif de purification (100, 200, 300, 400, 500) par rapport à l'échangeur thermique (1).

6. Échangeur thermique (1) selon la revendication précédente, dans lequel le dispositif de purification (100, 200, 300, 400, 500) comprend un système de verrouillage pour attacher le dispositif de purification (100, 200, 300, 400, 500) à l'interface (19a, 19b) et/ou à la bouche (40a,40b) du faisceau (2).

7. Échangeur thermique (1) selon la revendication précédente, dans lequel le système de verrouillage est configuré pour attacher l'interface (19a, 19b) à la bouche (40a, 40b) du faisceau (2).

8. Échangeur thermique (1) selon l'une des revendications 4, dans lequel la deuxième extrémité de la chambre de distribution (15, 17) logeant le dispositif de purification (600, 700) est ouverte sur un environnement extérieur du faisceau (2) selon l'axe d'empilement (E).

9. Échangeur thermique (1) selon la revendication précédente, dans lequel le dispositif de purification (600, 700) comporte un bouchon (60) à une extrémité opposée à une ouverture d'admission de fluide (36, 37).

10. Échangeur thermique (1) selon l'une des revendications 8 à 9, dans lequel le faisceau (2) présente une première bouche (40a) à une première extrémité, et une deuxième bouche (641) à une deuxième extrémité, la première bouche (40a) est configurée pour admettre le fluide, et la deuxième bouche (641) pour manipuler le dispositif de purification (600, 700) par rapport à l'échangeur thermique (1).

11. Échangeur thermique selon la revendication précédente, dans lequel le dispositif de purification (600, 700) comprend un dispositif de fixation configuré pour attacher le bouchon (605, 705) à la deuxième bouche (641).

12. Échangeur thermique (1) selon l'une des revendications précédentes, dans lequel le dispositif de purification (100, 200, 300, 400, 500, 600, 700) est un premier dispositif de purification agencé dans la première chambre de distribution (15) et dans lequel le faisceau (2) de plaques (3) comprend une première chambre d'évacuation (16) configurée pour recueillir le premier fluide ayant parcouru le premier chemin de circulation (6), et l'échangeur thermique (1) comprend un deuxième dispositif de purification agencé dans la première chambre d'évacuation (16).

13. Système de refroidissement d'un dispositif de stockage électrique pour un véhicule, comprenant un échangeur thermique (1) selon l'une quelconque des revendications précédentes, une boucle couplée thermiquement avec le dispositif de stockage électrique et en communication avec le premier chemin de circulation (6) de l'échangeur thermique (1), et un circuit en communication avec le deuxième chemin de circulation (7) de l'échangeur (1).

## Patentansprüche

1. Wärmetauscher (1) für ein Kraftfahrzeug, der eine Vielzahl von Platten (3) umfasst, wobei die Platten (3) entlang einer Stapelrichtung (E) übereinander gestapelt sind, um ein Bündel (2) von Platten (3) zu bilden, mindestens eine erste Platte (3) und mindestens eine zweite Platte (3) einen ersten Zirkulationsweg (6) definieren, der für eine Zirkulation eines ersten Fluids konfiguriert ist, mindestens die zweite Platte (3) und mindestens eine dritte Platte (3) einen zweiten Zirkulationsweg (7) definieren, der für eine Zirkulation eines zweiten Fluids konfiguriert ist. wobei das Bündel (2) von Platten (3) eine erste Verteilerkammer (IS), die so konfiguriert ist, dass sie den ersten Zirkulationsweg (6) mit einem ersten Fluid versorgt, und eine zweite Verteilerkammer (17), die so konfiguriert ist, dass sie den zweiten Zirkulationsweg (7) mit einem zweiten Fluid versorgt, umfasst, **dadurch gekennzeichnet, dass** der Wärmetauscher (1) mindestens eine Reinigungsvorrichtung (100, 200, 300, 400, 500, 600, 700) umfasst, die in einer der Verteilungskammern (15, 17) untergebracht ist und so konfiguriert ist, dass sie Wasser entfernt, das in den Wärmetauscher eingedrungen ist, und dadurch die Leitung von Elektrizität verhindert.

2. Wärmetauscher (1) nach dem vorhergehenden Anspruch, wobei der Wärmetauscher (1) eine Schnittstelle (19a, 19b) umfasst, die geeignet ist, mit einer Öffnung (36, 37) der Verteilungskammer (15, 17), in der die Reinigungsvorrichtung (100, 200, 300, 400, 500, 600, 700) untergebracht ist, und mit der Reinigungsvorrichtung (100, 200, 300, 400, 500, 600, 700) zusammenzuwirken, wobei die Reinigungsvorrichtung (100, 200, 300, 400, 500, 600, 700) in der Verteilungskammer (15, 17) untergebracht ist.

3. Wärmetauscher (1) nach dem vorhergehenden Anspruch, wobei die Schnittstelle (19a, 19b) mit mindestens einem Teil der Reinigungsvorrichtung (100, 200, 300) einstückig ist.

4. Wärmetauscher (1) nach einem der vorhergehenden Ansprüche, wobei die Verteilerkammer (15, 17), die die Reinigungsvorrichtung (100, 200, 300) beherbergt, 400, 500, 600, 700) umfasst ein erstes und ein zweites Ende, wobei das erste Ende zu einer Außenbewegung des Bündels (2) entlang der Stapellaufachse (E.) offen ist.

5. Wärmetauscher (1) gemäß dem vorhergehenden Anspruch, wobei das Bündel (2) an einem Ende eine Mündung (40a, 40b) aufweist, wobei die Mündung (40a, 40b) so konfiguriert ist, dass sie das Fluid einlässt und die Reinigungsvorrichtung (100, 200, 300, 400, 500) in Bezug auf den Wärmetauscher (1) manipuliert.

6. Wärmetauscher (1) nach dem vorhergehenden Anspruch, wobei die Reinigungsvorrichtung (100, 200, 300, 400, 500) ein Verriegelungssystem umfasst um die Reinigungsvorrichtung (100, 200, 300, 400, 500) an der Grenzfläche (19a, 19b) und/oder der Mündung (40a, 40b) des Bündels (2) zu befestigen.

7. Thermischer Wischer (1) nach dem vorhergehenden Anspruch, wobei das Verriegelungssystem so konfiguriert ist, dass es die Schnittstelle (19a, 19b) an der Mündung (40s, 40b) des Bündels (2) befestigt.

8. Wärmetauscher (1) nach einem der Ansprüche 4, wobei das zweite Ende der Verteilerkammer (13, 17), in der die Reinigungsvorrichtung (600, 700) untergebracht ist, zu einer äußeren Umgebung des Bündels (2) entlang der Stapelachse offen ist. ).

9. Wärmetauscher (1) gemäß dem vorhergehenden Punkt, wobei die Reinigungsvorrichtung (600, 700) an einem Ende, das einer Fluideinlassöffnung (36, 37) gegenüberliegt, einen Stopfen (60) aufweist.

10. Wärmetauscher (1) nach einem der Ansprüche 8 bis 9, wobei das Bündel (2) eine erste Öffnung (40a) an einem ersten Ende und eine zweite Öffnung (641) an einem zweiten Ende aufweist, wobei die erste Öffnung (40a) zum Einlassen des Fluids und die zweite Öffnung (641) zum Manipulieren der Reinigungsvorrichtung (600, 700) in Bezug auf den Wärmetauscher (1) konfiguriert ist.

11. Wärmetauscher nach dem vorhergehenden Anspruch, wobei die Reinigungsvorrichtung (600, 700) eine Vorrichtung umfasst, die so konfiguriert ist, dass sie den Stopfen (605, 705) an der zweiten Öffnung (641) befestigt.

12. Wärmetauscher (1) nach einem der vorhergehenden Ansprüche, wobei die Reinigungsvorrichtung (100, 200, 300, 400, 500, 600, 700) eine erste Reinigungsvorrichtung ist, die in der ersten Verteilungskammer (15) angeordnet ist, und wobei das Bündel (2) von Platten (3) eine erste Auslasskammer (16) umfasst, die so konfiguriert ist, dass sie das erste Fluid sammelt, das den ersten Zirkulationspfad (6) durchlaufen hat, und der Wärmetauscher (1) eine zweite Reinigungsvorrichtung umfasst, die in der ersten Auslasskammer (16) angeordnet ist.

13. System zum Kühlen einer elektrischen Speichervorrichtung für ein Fahrzeug, umfassend einen Wärmetauscher (1) gemäß einem der vorstehenden Ansprüche, einen mit der elektrischen Speichervorrichtung thermisch gekoppelten Kreislauf, der mit dem ersten Strömungsweg (6) des Wärmetauschers (1) in Verbindung steht, und einen mit dem zweiten Strömungsweg (7) des Wärmetauschers (1) in Verbindung stehenden Kreislauf.

## Claims

1. A heat exchanger (1) for a motor vehicle, comprising a plurality of plates (3), the plates (3) being stacked one on top of the other in a stacking direction (E) to form a bundle (2) of plates (3), at least a first plate (3) and at least a second plate (3) define a first flow path (6) configured for a flow of a first fluid, at least the second plate (3) and at least a third plate (3) define a second flow path (7) configured for a flow of a second fluid. the bundle (2) of plates (3) comprising a first distribution chamber (IS) configured to supply a first fluid to the first circulation path (6), and a second distribution chamber (17) configured to supply a second fluid to the second circulation path (7), **characterised in that** the heat exchanger (1) comprises at least one purification device (100, 200, 300, 400, 500, 600, 700) housed in one of the distribution chambers (15, 17) and configured to remove water which has entered the heat exchanger and thus prevent the conduction of electricity.

2. The heat exchanger (1) according to the preceding claim, in which the heat exchanger (1) comprises an interface (19a, 19b) able to cooperate with an orifice (36, 37) of the distribution chamber (15, 17) housing the purification device (100, 200, 300, 400, 500, 600, 700) and with the purification device (100, 200, 300, 400, 500, 600, 700).

3. The heat exchanger (1) according to the preceding claim, in which the interface (19a, 19b) is integral with at least part of the purification device (100, 200, 300).

4. The heat exchanger (1) according to one of the preceding claims, in which the distribution chamber (15, 17) housing the purification device (100, 200, 300), 400, 500, 600, 700) comprises a first and a second end, the first end being open to external movement of the bundle (2) along the axis of rotation (E).

5. The heat exchanger (1) according to the previous claim, in which the bundle (2) has a mouth (40a, 40b) at one end, the mouth (40a, 40b) is configured to admit the fluid and to handle the purification device (100, 200, 300, 400, 500) with respect to the heat exchanger (1).

6. The heat exchanger (1) according to the preceding claim, in which the purification device (100, 200, 300, 400, 500) comprises a locking system to attach the purification device (100, 200, 300, 400, 500) to the interface (19a, 19b) and/or to the mouth (40a, 40b) of the bundle (2).

7. The heat exchanger (1) according to the preceding claim, in which the locking system is configured to attach the interface (19a, 19b) to the mouth (40a, 40b) of the bundle (2).

8. The heat exchanger (1) according to one of claims 4, in which the second end of the distribution chamber (13, 17) housing the purification device (600, 700) is open to an environment outside the bundle (2) along the stacking direction(E).

9. The heat exchanger (1) according to the preceding claim, in which the purification device (600, 700) comprises a plug (60) at an end opposite a fluid inlet opening (36, 37).

10. The heat exchanger (1) according to one of claims 8 to 9, wherein the bundle (2) has a first mouth (40a) at a first end, and a second mouth (641) at a second end, the first mouth (40a) is configured to admit fluid, and the second mouth (641) to manipulate the purification device (600, 700) relative to the heat exchanger (1).

11. The heat exchanger according to the preceding claim, wherein the purification device (600, 700) comprises a fixation device configured to attach the plug (605, 705) to the second mouth (641).

12. The heat exchanger (1) according to one of the preceding claims, wherein the purification device (100, 200, 300, 400, 500, 600, 700) is a first purification device arranged in the first distribution chamber (15) and wherein the bundle (2) of plates (3) comprises a first discharge chamber (16) configured to collect the first fluid having travelled the first circulation path (6), and the heat exchanger (1) comprises a second purification device arranged in the first discharge chamber (16).

13. System for cooling an electrical storage device for a vehicle, comprising a heat exchanger (1) according to any one of the preceding claims, a loop thermally coupled with the electrical storage device and in communication with the first flow path (6) of the heat exchanger (1), and a circuit in communication with the second flow path (7) of the heat exchanger (1).
